# EUROPEAN PATENT SPECIFICATION

(11) **EP 4 015 311 B1**
(45) Date of publication and mention of the grant of the patent: **09.08.2023**
(21) Application number: 20216213.7
(22) Date of filing: 21.12.2020
(51) Int. Cl.: B60Q 1/50, B60W 50/14, B60K 35/00, G06F 3/01, G06V 20/56

(54) **VEHICLE DRIVER ASSISTANCE SYSTEM, VEHICLE, DRIVER ASSISTANCE METHOD, COMPUTER PROGRAM AND COMPUTER-READABLE MEDIUM**
FAHRERASSISTENZSYSTEM, FAHRZEUG, FAHRERASSISTENZVERFAHREN, COMPUTERPROGRAMM UND COMPUTERLESBARES MEDIUM
SYSTÈME D'ASSISTANCE AU CONDUCTEUR D'UN VÉHICULE, VÉHICULE, PROCÉDÉ D'ASSISTANCE AU CONDUCTEUR, PROGRAMME INFORMATIQUE ET SUPPORT LISIBLE PAR ORDINATEUR

(43) Date of publication of application: 22.06.2022
(73) Proprietor: TOYOTA JIDOSHA KABUSHIKI KAISHA, Toyota-shi, Aichi-ken, 471-8571 (JP); Stichting Nederlandse Wetenschappelijk Onderzoek Instituten met haar Instituut Centrum Wiskunde & Informatica, 1098 XG Amsterdam (NL)
(72) Inventor: DE WESER, Marleen, 1140 BRUSSELS (BE); ABDELKAWY, Hazem, 1140 BRUSSELS (BE); GHOSH, Surjya, 1098 XG AMSTERDAM (NL); PONS RODRIGUEZ, Gerard, 1098 XG AMSTERDAM (NL); EL ALI, Abdallah, 1098 XG AMSTERDAM (NL); CESAR, Pablo, 1098 XG AMSTERDAM (NL)
(74) Representative: Cabinet Beau de Loménie

(56) References cited:
- DE-A1-102017 217 745
- DE-A1-102018 213 600
- DE-A1-102019 204 780
- US-A1- 2019 354 181
- US-A1- 2020 134 672

## Description

### FIELD OF THE INVENTION

The present invention concerns assistance systems to assist the drivers of vehicles, in particular during the interactions between the vehicle and people present around the vehicle.

### BACKGROUND OF THE INVENTION

As exemplary systems enabling a vehicle to take into account or to interact with road users, a device for generating a signal of a vehicle for a road device is disclosed by document DE 10 2017 217745 A1, and a method for operating a motor vehicle taking into account other road users is disclosed by document DE 10 2019 204780 A1.

Until a very recent period, vehicles have had no, or very little, capacity to capture and understand the situation around them, and to adapt the driving and more broadly, any control of the vehicle, to optimize the interactions between the vehicle and its environment. For this reason, until a very recent period the whole tasks of driving the vehicle and of adapting the vehicle - and the way it was driven - to its environment were only performed by the driver of the vehicle.

However, in recent years numerous driver assistance systems have been developed to take over part or all of the driving tasks of the driver. Some of these systems for instance are capable of regulating the speed of the vehicle, of performing emergency braking, or of maintaining the vehicle in its lane.

However, these driver assistance systems still have limitations. They first have limitations regarding their understanding of the surrounding scene. For instance, cruise control functions may be only based on the variations of the distance between a vehicle and a preceding vehicle, which is still a very basic understanding of the driving situation. In addition, these systems essentially control the steering, braking and acceleration of the vehicle. Conversely, these systems are still unable to adapt other controls of the vehicles, despite the number of controls that could be optimized in a modern vehicle.

Accordingly, there is room for development of advanced driver assistance systems, to enable the vehicles on which these systems are mounted to be driven more safely, and in particular with a better understanding between the vehicle and the other road users.

The references below disclose several systems and methods that have been developed to obtain information either about the behavior of human beings, or about the affective state of human beings, in particular drivers.

### References:

[1] Deng, Q., Tian, R., Chen, Y., and Li, K.: Skeleton model based behavior recognition for pedestrians and cyclists from vehicle scene camera, in 2018 IEEE Intelligent Vehicles Symposium (IV) (2018), IEEE, pp. 1293-1298.
[2] Molchanov, P., Yang, X., Gupta, S., Kim, K., Tyree, S., and Kautz, J.: Online detection and classification of dynamic hand gestures with recurrent 3d convolutional neural network, in Proceedings of the IEEE conference on computer vision and pattern recognition (2016), pp. 4207-4215.
[3] Tran, D.-S., Ho, N.-H., Yang, H.-J., Baek, E.-T., Kim, S.-H., AND Lee, G.: Real-time hand gesture spotting and recognition using rqb-d camera and 3d convolutional neural network, in Applied Sciences 10, 2 (2020), 722.
[4] Baltrusaitis, T., Zadeh, A., Lim, Y. C., and Morency, L.: Openface 2.0: Facial behavior analysis toolkit, in 2018 13th IEEE International Conference on Automatic Face Gesture Recognition (FG 2018) (2018), pp. 59-66.
[5] Kiranyaz, S., Ince, T., Hamila, R., and Gabbouj, M.: Convolutional neural networks for patient-specific ecg classification, in 2015 37th Annual International Conference of the IEEE Engineering in Medicine and Biology Society (EMBC) (2015), IEEE, pp. 2608-2611.
[6] Hori, C., Hori, T., Lee, T.-Y., Zhang, Z., Harsham, B., Hershey, J. R., Marks, T. K., and Sumi, K.: Attention-based multimodal fusion for video description, in Proceedings of the IEEE international conference on computer vision (2017), pp. 4193-4202.
[7] Islam, M. M., and Iqbal, T.: Hamlet: A hierarchical multimodal attention-based human activity recognition algorithm. arXiv preprint arXiv:2008.01148 (2020).

### DISCLOSURE OF THE INVENTION

In order to enable a vehicle to be driven more safely, and in particular with a better understanding and cooperation between the vehicle and the other road users, the following system is proposed.

This vehicle driver assistance system comprises a gesture detection unit configured, based on scene images of a scene around a vehicle, to detect that in a vicinity of the vehicle a human being has made a predetermined gesture which is a gesture among a set of predetermined gestures; a driver emotion determination unit configured, based at least on images of a driver of the vehicle, to determine an affective state of the driver; and a vehicle control unit configured, when the gesture detection unit has detected that in the vicinity of the vehicle a human being has made the predetermined gesture, and the driver emotion determination unit has determined that the affective state of the driver or a change thereof has reached a predetermined range within a maximum response time of the driver after the human being made the predetermined gesture, to adapt a control of the vehicle.

The affective state can preferably include an arousal and/or a valence of the driver.

A gesture is a movement usually of the body or limbs, of the human being, that expresses or emphasizes an idea, or sentiment, that he or she may have. The gesture can be for instance a wave of the hand, or even of a finger; it can also be a facial expression, etc.

The control of the vehicle can be any control of the vehicle; that is, any control that can be transmitted by a control system of the car, to a controlled device of the car, such as an actuator, a lamp, a display, a brake, an engine, a motor, of the vehicle, etc.

A 'control' of the vehicle does not only encompass a single control signal transmitted at one point in time: A control of the vehicle may comprise a plurality of control signals dispatched by the vehicle control unit to one or more controlled device(s), at a specific time or over a period of time.

Adapting the control of the vehicle encompasses in particular issuing new controls, or new commands, for the vehicle. For instance, switching on the headlamps of the vehicle is an example of adapting a control of the vehicle.

The human being whose gesture is detected by the gesture determination unit can be a pedestrian, or more broadly any person present around the vehicle (a cyclist, another driver, a passenger of a bus, etc.).

To simplify, in the following explanations, the human being whose gesture is detected will be referred to in some cases as 'the pedestrian'. Therefore, any reference below to a pedestrian should be interpreted as referring broadly to any human whose gesture has been detected by the gesture determination unit.

The detection of the gesture of the pedestrian, as well as the determination of the affective state of the driver (or of the change thereof) are preferably made substantially in real time.

When it is detected that the affective state of the driver or a change thereof has reached a predetermined range within the maximum response time of the driver after the human being made the predetermined gesture, the affective state of the driver or the change thereof reaching the predetermined range is interpreted as a response of the driver to the gesture made by the human being. The 'maximum response time' of the driver is typically a period of a few seconds. The maximum response time can be for instance equal to 3, 4 or 5 seconds. The response time of the driver may depend on the specific gesture that has been detected.

Accordingly, given the advances in the proposed vehicle driver assistance system, when it is detected that a person around the vehicle made one of the predetermined gestures, and shortly afterward, a response of the driver to that gesture is determined, the control of the vehicle is adapted. This means that the vehicle control unit selects the value of the control of the vehicle at least based on the detection of the predetermined gesture and of the corresponding response of the driver.

Advantageously, the driver assistance system can perform its function in most cases automatically, without any intervention of the driver. However, in certain embodiments, and/or in some specific circumstances, the vehicle control unit may be configured to adapt the control of the vehicle only after the control has been approved by the driver of the vehicle.

In some embodiments, the vehicle control unit is configured to adapt the control of the vehicle at least by issuing a control to adapt an interface of the vehicle. Indeed, since the adaptation of the control of the vehicle is based on the detection of a gesture of a pedestrian and of the corresponding response of the driver to this gesture, it is directly linked with the interaction between the vehicle (or of its driver) and the pedestrian. It has appeared that in many cases, in such circumstances, adapting an interface of the vehicle increases the level of understanding between the driver (or 'the vehicle') and the pedestrian, and therefore contributes to drive the vehicle in better understanding or harmony with its environment, - in this case, the pedestrian.

The adaption of the vehicle interface can comprise for instance displaying a media item (e.g., an image) on an inner or outer display of the vehicle, which image is chosen based on the specific gesture that has been detected, and on the response of the driver to this gesture, evaluated on the basis of his/her affective state or the change thereof. For instance, a smiling smiley can be displayed when the driver is pleased by a friendly gesture made by a pedestrian to the driver. Since the modification of the vehicle interface is decided based on the affective state of the driver (and/or a change thereof), this modification reflects the affective state of the driver; consequently, the vehicle driver assistance system facilitates the communication between the driver of the vehicle and the occupants of the vehicle, and/or the persons present around the vehicle.

The interface of the vehicle comprises all the communication devices, mounted inside or outside the vehicle, which make it possible for the vehicle to transmit information to occupant(s) of the vehicle or to people outside the vehicle.

Accordingly, the control to adapt an interface of the vehicle can include a control to emit a light and/or a sound pattern and/or to display visual information, inside and/or outside the vehicle. The sound pattern is any type of sound, for instance a short series of music notes, a pre-recorded voice message, etc.

In some embodiments, the driver emotion determination unit comprises one or more processors, and one or more storage devices storing instructions that when executed by the one or more processors cause the one or more processors to determine an affective state of the driver, using a neural network, the determination being made based at least on a first input which is a sequence of the images of the driver.

In some variants of these embodiments, the driver emotion determination unit is configured to input, in addition to the images of the driver, at least one second input chosen among thermal camera images of the driver, outputs of an eye tracker device monitoring eyes of the driver; measurements of blood volume pulses, of a galvanic skin response, and of inter-beat intervals of heart beats, of the driver. In these variants, the driver emotion determination unit is configured to determine the affective state of the driver also on the basis of said at least one second input.

In some first variants of these variants, in the vehicle driver assistance system, for each input of the driver emotion determination unit, the driver emotion determination unit comprises a sub-unit configured to output an estimated set of features representing an affective state of the driver, based on the considered input, and the driver emotion determination unit comprises a data fusion sub-unit configured to determine an affective state of the driver, based on the respective estimated sets of features.

In some second variants of these variants or of the first variants, the driver assistance system comprises an input synchronization unit configured, at each time step at which a new image of the driver is received by the driver emotion determination unit, for each input of the driver emotion determination unit, to output an up-to-date value of the input; and the driver emotion determination unit is configured to determine the affective state of the driver on the basis of the up-to-date values outputted for the respective inputs.

In accordance with the present invention, the vehicle control unit is configured to identify at successive time steps, whether detected event(s) and the response(s) thereto correspond to any one of predetermined combinations of events and of responses to these events. A detected event can be for instance the detection of a predetermined gesture by the gesture detection unit.

When for one such combination, all the event(s) of the combination is or are detected, and when the values of the affective state response(s) of the driver have the predetermined value(s) or are in the predetermined range(s) for all the responses of the combination, the vehicle control unit adapts a control of the vehicle. The control of the vehicle is appropriately adapted based on the detected combination.

A combination of events and responses thereto includes, at least, a gesture event; a driver affective state response to said gesture event; and a time relationship which defines that the affective state response of the driver to said gesture event has to take place within a maximum response time after said gesture event.

A combination of events and responses thereto may further comprise additional driving event(s) and/or additional responses of the driver to the events.

A gesture event is the detection of one of the predetermined gestures by the gesture detection unit.

A driver affective state response, in association with a gesture event, is detected when the affective state of the driver or a change thereof reaches values or ranges which have been predetermined as characterizing a specific response of the driver to the associated gesture event, for the considered combination.

A driving event is any event which can occur in or around the vehicle. A driving event is characterized by values (and/or ranges) defined for the variable(s) of a set of variable(s) (among the variables recorded or calculated by the driver assistance system). When this or these variables attain the values or ranges characterizing the driving event, the driving event is detected and recorded. The definition of a driving event may in some cases include conditions on the duration of the event. For instance, a braking event (an example of a driving event) can be defined by a single required value, that is, a threshold for the intensity of the braking. If during driving, braking intensity exceeds this braking threshold, a braking event is detected.

A combination of events and responses may further include additional time relationships defining one or more additional conditions which have to be met between the respective timings of the event(s) and response(s) thereto of the combination.

The vehicle control unit is configured to adapt the control of the vehicle, on the basis of a predetermined combination of events and responses, only if all the time relationships of the combination are fulfilled. For instance, in some embodiments, for one or more combinations, the control is issued only if two specific events are detected, and a specific driver affective state response to the second one of these events is also detected within a maximum response time of the driver, which depends on the timings of the two specific events detected.

The present invention further encompasses a vehicle comprising the above-defined vehicle driver assistance system.

In addition, a computer-implemented vehicle driver assistance method is proposed for a vehicle to enable the vehicle to take over some of the tasks of the driver during driving, by detecting events taking place in relation with the vehicle, and by adapting the control of the vehicle on the basis of the detected events and on the responses of the driver to these events.

This method comprises performing iteratively the following steps:
- S10) receiving a scene image of a scene around a vehicle;
- S20) based on the received scene images, detecting that a human being has made a predetermined gesture in a vicinity of the vehicle, the predetermined gesture being a gesture among a set of predetermined gestures;
- S50) receiving a driver image of a driver of the vehicle;
- S70) based at least on the received driver images, determining an affective state of the driver; and,
- S100) if (or when) it has been detected that in the vicinity of the vehicle a human being has made the predetermined gesture, and it has been determined that the affective state of the driver or a change thereof has reached a predetermined range within a maximum response time of the driver after the human being made the predetermined gesture, adapting a control of the vehicle.

In order to adapt the control of the vehicle at step S100, at step S100 it is determined whether in the vicinity of the vehicle a human being has made the predetermined gesture, and the affective state of the driver or a change thereof has reached the predetermined range within the maximum response time of the driver after the human being made the predetermined gesture.

In some embodiments, adapting the control of the vehicle comprises at least issuing a control to adapt an interface of the vehicle

In some embodiments, at step S70, the driver affective state or the change thereof is determined using a neural network, based at least on a first input which is a sequence of images of the driver.

In some variants of these latter embodiments, the driver assistance method further comprises a step S60 of inputting at least one second input chosen among thermal camera images of the driver, outputs of an eye tracker device monitoring eyes of the driver; measurements of blood volume pulses, of a galvanic skin response, and of inter-beat intervals of heart beats, of the driver. In these variants, the determination of the affective state of the driver is performed also on the basis of said at least one second input.

In these variants, determining the driver affective state may comprise in some embodiments, for each input, to output an estimated set of features based on the considered input, and to determine the affective state of the driver based on the respective estimated sets of features.

In some embodiments, the method further comprises, at each time step at which a new image of the driver is received, for each input of the driver emotion determination unit, obtaining an up-to-date value of the input; and the determination of the affective state of the driver is performed at each said time step, on the basis of the up-to-date values obtained for the respective inputs.

In some embodiments of the method, the detected gesture constitutes a first gesture event; the affective state of the driver or a change thereof reaching a predetermined range constitutes a first driver affective state response to this event; and for at least one combination of event(s) and response(s) comprising at least the first gesture event and the first driver affective state response, the interface of the vehicle is only adapted if respective timings of the event(s) and response(s) of said at least one combination meet a predetermined relationship.

In a particular implementation, the proposed method is determined by computer program instructions.

Accordingly, another purpose the present invention is to propose a computer program comprising instructions which, when the program is executed by a computer, cause the computer to carry out the steps of the above-defined method. The computer program may use any programming language, and be in the form of source code, object code, or code intermediate between source code and object code, such as in a partially compiled form, or in any other desirable form. The computer may be any data processing means, for instance a personal computer, an electronic control unit configured to be mounted in a vehicle, a remote server, etc.

The present invention also includes a non-transitory computer readable medium having the above-defined computer program stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

### BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which :
Fig.1 is a schematic top view of a car in which a vehicle driver assistance system according to the present invention is mounted;
Fig.2 is a schematic view in perspective of the cabin of the car shown on Figure 1;
Fig.3 is a schematic representation of the vehicle driver assistance system of Figure 1;
Fig.4 is a schematic representation of the architecture of the driver emotion determination unit of the vehicle driver assistance system of Figure 1;
Fig.5 is a schematic representation of the architecture of a first sub-unit of the driver emotion determination unit of Fig.4;
Fig.6 is a schematic representation, over three time steps, of a process applied by the first sub-unit shown on Figure 5;
Fig.7 is a schematic representation of the architecture of a second sub-unit of the driver emotion determination unit of Fig.3;
Fig.8 is a schematic representation of an image obtained by applying a facial landmarks extraction process to an image of a face of the driver;
Fig.9 is a schematic representation of an image obtained by applying a Regions-of-Interest-Search process to a thermal image of the face of the driver;
Fig.10 is a schematic representation of the architecture of a third sub-unit of the driver emotion determination unit of Fig.3;
Fig.11 is a schematic representation of the architecture of a data fusion sub-unit of the driver emotion determination unit of Fig.3;
Fig.12 is a schematic view in perspective of a scene showing a use case of the vehicle driver assistance system of Figure 1;
Fig.13 is a schematic diagram showing the steps of a driver assistance method according to the present invention.

### DESCRIPTION OF PREFERRED EMBODIMENTS

A vehicle driver assistance system 100 according to the present invention will now be presented, mounted on a car 1.

### ARCHITECTURE OF SYSTEM 100

### Material architecture

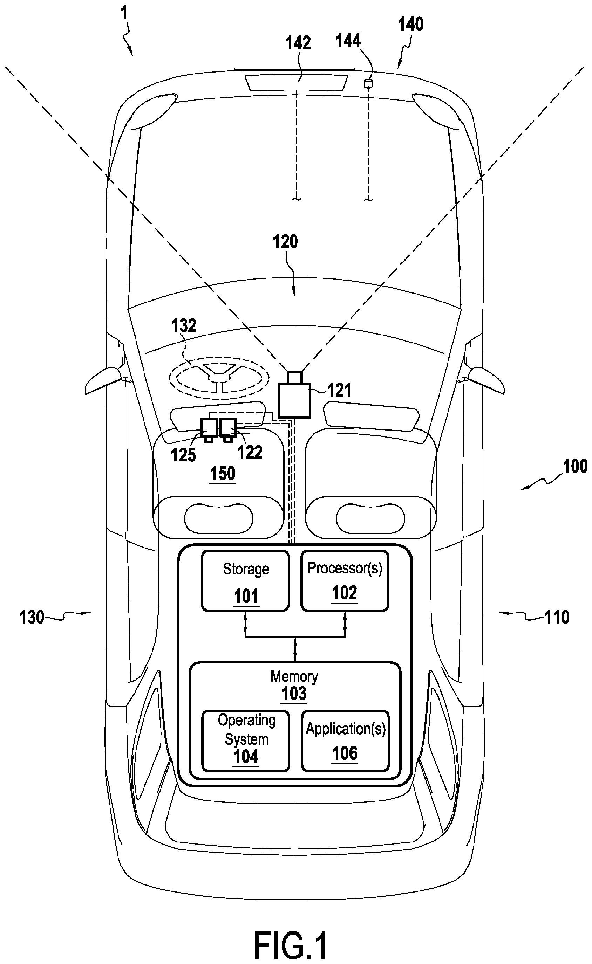

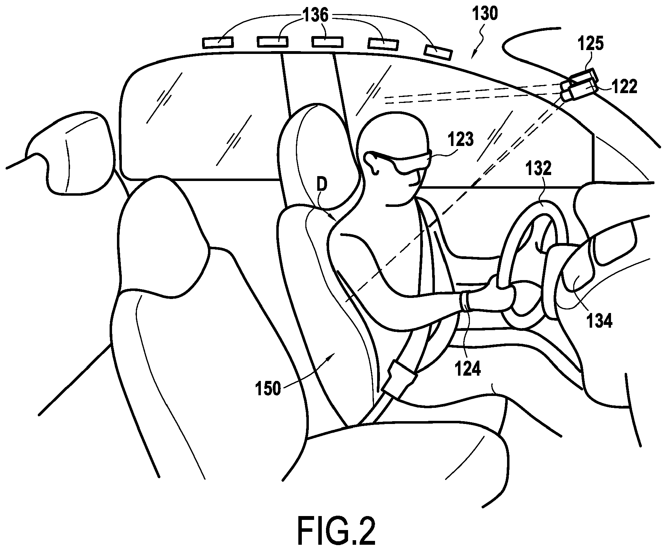

The material architecture of the exemplary vehicle driver assistance system 100 is shown schematically on Figs.1 and 2.

Car 1 is an example of a vehicle on which a vehicle driver assistance system according to the present invention can be mounted. More generally, a vehicle driver assistance system according to the present invention can be mounted on any kind of vehicle, for instance a truck, an agricultural machine, a construction machine, that is, any machine which can be driven by a driver. The vehicle can have any level of automation; for instance, it can be highly automated (level 4, on the basis of the SAE J3016 'Levels of automation' standard).

Car 1 comprises a driver seat 150 on which the driver (D) is seated during driving.

The vehicle driver assistance system 100 mainly comprises a central driving computer 110, a set of sensors 120, an internal interface 130, and an external interface 140.

Importantly, most components of system 100 are shared components, which are used to perform multiple tasks. That is, the components of the vehicle driver assistance system 100 perform the functions of system 100, but may also perform other functions in vehicle 1. In addition, although this will not be developed below, the vehicle driver assistance system 100 is configured to perform usual functions of a driver assistance system such as lane keep assist, advanced cruise control, etc.

Moreover, although the driving computer 110 is represented on Fig.1 in a single box, it may comprise one or more processors, and can therefore be a distributed calculation system, distributed over a plurality of processors, possibly physically arranged on different locations.

The set of sensors 120 comprises external sensors, to perceive an external environment of car 1: It comprises several external cameras 121, as well as lidars and radars. From the external sensors, in particular from external cameras 121, only a front camera is represented in the figures. The cameras 121 are configured to acquire images of the environment of car 1, on 360° around it, at successive time steps.

The set of sensors further comprises several driver monitoring sensors to monitor the driver. These driver monitoring sensors comprise a driver monitoring camera 122, a head-mounted eye-tracker 123, a wristband 124, and an infra-red driver monitoring camera 125. The driver monitoring cameras 122 and 125 placed near the sun-shade of the driver, and are positioned so as to acquire images of the face of the driver during driving. Camera 122 acquires images in the visible spectrum, while the infra-red camera 125 acquires images in the infra-red spectrum. The eye-tracker 123 is configured to acquire images of the eyes of the driver, and to output measurements of eye movements EM and of the pupil diameter PD of the eyes of the driver. The wristband 124 is configured to output measurements of the blood volume pulses BVP, of the electro-dermal activity or galvanic skin response GSR, and of the inter-beat intervals IBI between the heart beats, of the driver.

The functions (the functional units) of driving system 100 are implemented on the computer 110.

Computer 110 comprises a storage 101, one or more processor(s) 102, a memory 103, an operating system 104, a communication infrastructure 105 and additional applications 106.

The computer 110, in particular in its memory 103, stores instructions which when executed by the one or more processor(s) 102 cause the one or more processor(s) 102 to implement the different functional units or functions of system 100.

The one or more processors 102 are intended to be representative of the presence of any one or more processors or processing devices, of any of a variety of forms.

The communication infrastructure 105 is a data bus to which all the above-mentioned sensors 120, the internal interface 130 and the external interface 140 are connected, and therefore through which the signals outputted by these sensors and by the processor(s) 102 are transmitted to the other components of system 100.

The storage 101, the processor(s) 102, the memory 103, and the operating system 104 are communicatively coupled over the communication infrastructure 105. The operating system 104 may interact with other components to control one or more applications 106.

A computer program to perform driver assistance tasks according to the present invention is stored in memory 103. This program, and the memory 103, are examples respectively of a computer program and a computer-readable recording medium pursuant to the present invention.

The memory 103 of the computer 110 indeed constitutes a recording medium according to the invention, readable by the one or more processor(s) 102 and on which said program is recorded.

The internal interface 130 is a set of components controlled by the vehicle driver assistance system 100, and which can transmit information to the occupants of the vehicle. In the present embodiment, the internal interface 130 comprises a haptic steering wheel 132 (which can vibrate to transmit a haptic signal to the driver), a display 134 configured to display information for the occupants of the vehicle, and a series of LEDs 136 positioned in the cabin of the car. LEDs 136 are able to emit light in several colors in the cabin of the vehicle, to transmit information to the occupants of the vehicle about the affective state of the driver.

The external interface 140 is a set of components controlled by the vehicle driver assistance system 100, and which can transmit information to people around the vehicle. External interface 140 comprises a display 142 at the front of the vehicle, configured to display images to represent an emotion of the vehicle (or of the driver); and a projector 144, configured to project patterns of laser light on the road in front of the car, in order to transmit information to the people around the vehicle.

### Functional architecture of vehicle driver assistance system 100

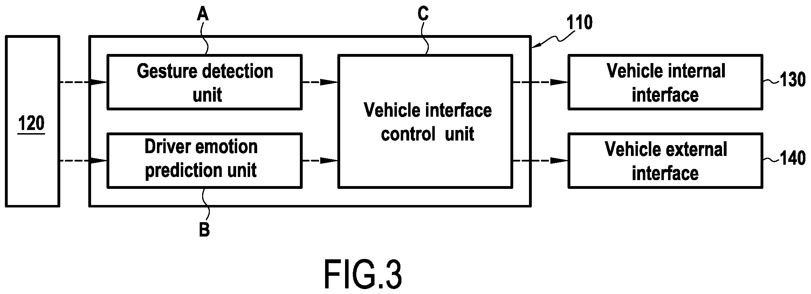

The functional architecture of system 100 is shown schematically on Fig.3.

Vehicle driver assistance system 100 ('system 100') comprises in particular three functional units: a gesture detection unit A, a driver emotion determination unit B and a vehicle control unit C. These three units are functional units of system 100, implemented by the computer 110. (As noted above, system 100 is configured to realize functions such as lane keep assist, etc; it therefore comprises additional functional units than those shown on Fig.3).

In order to perform its function, the vehicle driver assistance system 100 receives the outputs of the set of sensors 120.

The gesture detection unit A receives the images I of the cameras 121, at successive time steps. Based on these images, the gesture detection unit A detects whether a human being in a vicinity of car 1 has made a predetermined gesture.

In parallel, the driver emotion determination unit B receives information about the driver, called 'driver monitoring data', from the driver monitoring sensors 122-125; based on these data, the driver emotion determination unit B determines the affective state of the driver.

The outputs of the gesture detection unit A and of the driver emotion determination unit B are transmitted to the vehicle control unit C.

When the gesture detection unit A has detected that in the vicinity of the vehicle a human being has made a predetermined gesture, and the driver emotion determination unit B has determined that the affective state of the driver or a change thereof has reached a predetermined range in a certain response time after the gesture was made, the vehicle control unit C adapts a control of the car. For instance, the vehicle control unit C adapts the inner and/or the outer interface (130,140) of the vehicle.

The architecture of the gesture detection unit A, the driver emotion determination unit B and the vehicle control unit C are now going to be presented in more details.

### The gesture detection unit A

Gesture detection unit A is a functional unit implemented on the computer 110. Based on the images I acquired by the external cameras 121, it detects whether a pedestrian (or more generally any human being present near the car), who appears on the images captured by these cameras, makes one of a set of predetermined gestures. These gestures are gestures which can be significant for the driver of the car.

In the present embodiment, the gesture detection unit A is trained to identify the following predetermined gestures:
- three generally friendly gestures: 'hand-wave', 'eye contact', and 'nod'; and
- three rather unfriendly gestures: 'engage-with-phone', 'running-in-the-middle-of-the-road', and 'impolite-hand-gesture'.

Any gesture detection unit capable of detecting specific gestures of human beings based on video sequences can be used in a vehicle driver assistance system according to the present invention. In some embodiments, the gesture recognition unit can be based on a three-dimensional convolutional neural network (3DCNNs): Refer for instance to the technology described in references [1], [2] and [3].

The output of gesture detection A comprises the indication of the specific gesture that has been detected, as well as the indication of the time at which the specific gesture has been performed.

In some embodiments, when a predetermined gesture has been detected, additional information can be reported by the gesture detection A, for instance: the fact that the pedestrian is near or on a pedestrian crossing; the position of the pedestrian relative to the car; etc.

### The driver emotion determination unit B

Driver emotion determination unit B is a functional unit implemented on the computer 110. Based on the inputs acquired by the driver monitoring sensors of car 1, it predicts substantially in real-time an affective state of the driver. In the present embodiment, the affective state comprises two variables, namely the arousal Ar and the valence Va of the driver.

The driver emotion determination unit B is configured to acquire the driver monitoring data. These data comprise several inputs:
- the images I1 acquired by the driver monitoring camera 122.
- the images I2 acquired by the infra-red camera 125;
- the series of measurements PD,EM of the pupil diameter and eye movements of the driver, outputted by the eye-tracker 123;.
- the series of measurements of the blood volume pulses BVP, the galvanic skin response GSR, and the inter-beat intervals IBI of the driver, outputted by the wristband 124.

Among these inputs, the images I1 and I2 are acquired at each time step. Conversely, the measurements outputted by the eye-tracker 123 and by the wristband 124 are acquired at a lower frequency, due to the lower acquisition rate of these measurements.

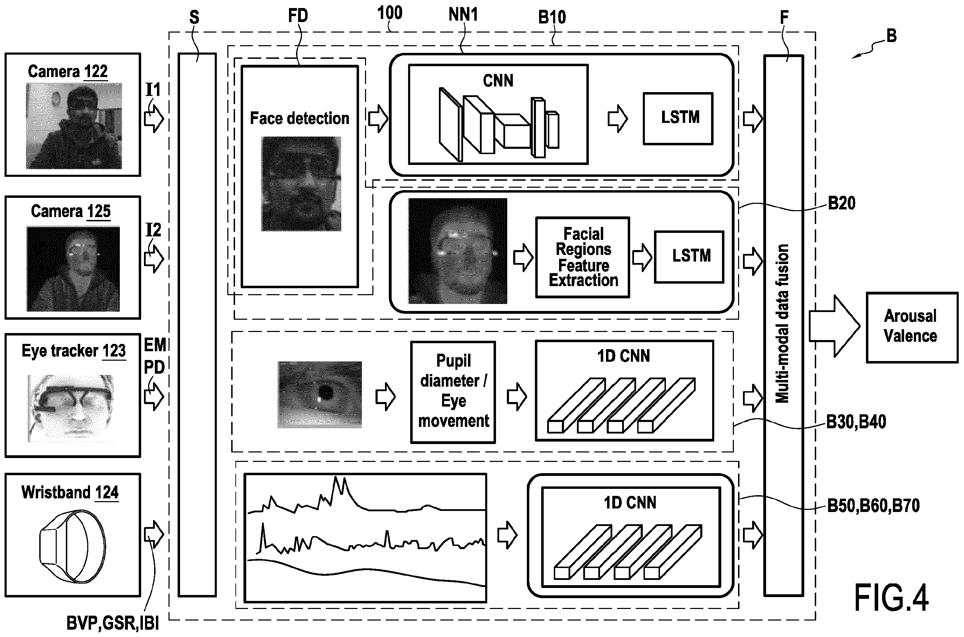

To process these data, as shown on Fig.4, the driver emotion determination unit B comprises upstream, an input synchronization unit S; then, in parallel, seven specialised sub-units B10,B20,B30,B40,B50,B60 and B70; and downstream, a data fusion unit or neural network F.

The input synchronization unit S is configured to provide to the different specialised sub-units, at each time step at which the images I1 and I2 are received, up-to-date values for the different inputs that they receive respectively. (These up-to-date values are values representing an estimate of the value for each of the different inputs, precisely at the time of the considered time step). The sub-units are specialised, and accordingly are configured to process specific inputs: B10 receives the images I1; B20 receives the images I1 and I2; B30 and B40 receive respectively the eye-tracker measurements PD and EM; B50, B60 and B70 receive respectively the wrist-band measurements BVP, GSR and IBI.

Since new values of the measurements (PD,EM,BVP,GSR,IBI) are not available at each time step, the input synchronization unit S is configured to interpolate the data received from the eye-tracker and the wristband so as to provide to all the specialised sub-units their respective inputs at each time step. Accordingly, by interpolation (or by any other suitable mathematical method), the input synchronization unit S calculates estimated up-to-date values for all the measurements PD,EM,BVP,GSR and IBI at each time step.

Then, in parallel, the sub-units B10, B20, B30, B40, B50, B60 and B70 process their respective inputs so as to output respective sets of driver affective state features.

These driver affective state features are then concatenated by a data fusion neural network F which combines these features so as to output the value of the affective state of the driver for the considered time step.

The structure and functioning of the specialised sub-units and of the data fusion unit F of the driver emotion determination unit B are now going to be described.

### B10: Driver affective state features estimation based on images I1 of the driver

The specialised sub-unit B10 is configured to perform the following tasks:
At each time step, an image (or frame) I1 is acquired from the driver monitoring camera 122.

In this image, the face of the driver D is first detected and cropped by a face detection module FD (This module is common with sub-unit B20).

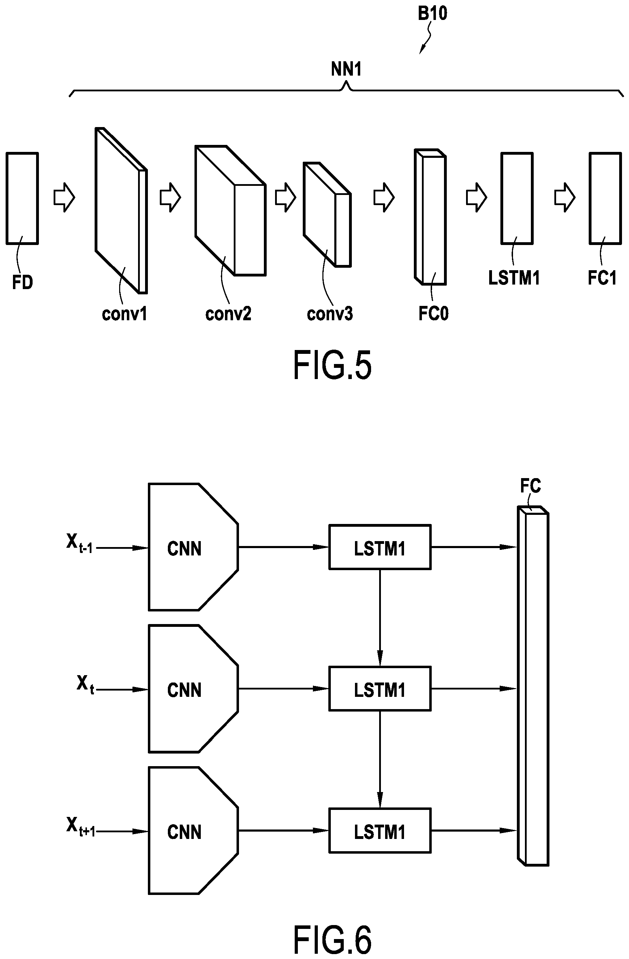

Then, the sub-image showing the face of the driver is inputted in a convolutional neural network NN1, shown in Fig.5. The neural network NN1 comprises successively three convolutional blocks conv1, conv2 and conv3 (forming together a convolutional block CNN), an upstream fully-connected layer FC0, an LSTM module ('LSTM1'), and a downstream fully connected layer FC1.

With respect to the flow of data, the upstream and downstream fully-connected layers FC0 and FC1 are arranged respectively upstream and downstream of the block LSTM1.

If sufficient data is available, more than three convolutional blocks can be used to improve the performance of the network.

Each of the convolutional blocks conv1, conv2 and conv3 comprises first respectively a convolutional layer (comprising respectively 64, 128, and 256 filters, for blocks conv1, conv2 and conv3), each of size 5x5; a ReLU layer; a batch normalization layer; and a max-pooling layer.

The output of the three convolutional blocks conv1, conv2 and conv3 is inputted into the upstream fully-connected layer FC0, which comprises 300 neurons.

Then, in order to take advantage of the temporal information, the output of the fully-connected layer FC0 is passed through a Long Short-Term Memory bloc (LSTM1), which comprises a single layer of 50 hidden units.

At each time step, the output of layer FC0 is transmitted to the block LSTM1. Fig.6 shows this transmission to the block LSTM1 at successive time steps t-1, t and t+1. In addition, as shown in Fig.6, at each time step, the block LSTM1 further receives its output of the previous time step.

Finally, the output of the block LSTM1 is passed through the downstream fully-connected layer FC1, which comprises 256 neurons. The output of layer FC1 is a first estimated set of features representing the affective state of the driver.

### B20: Driver affective state features estimation based on thermal images of the driver

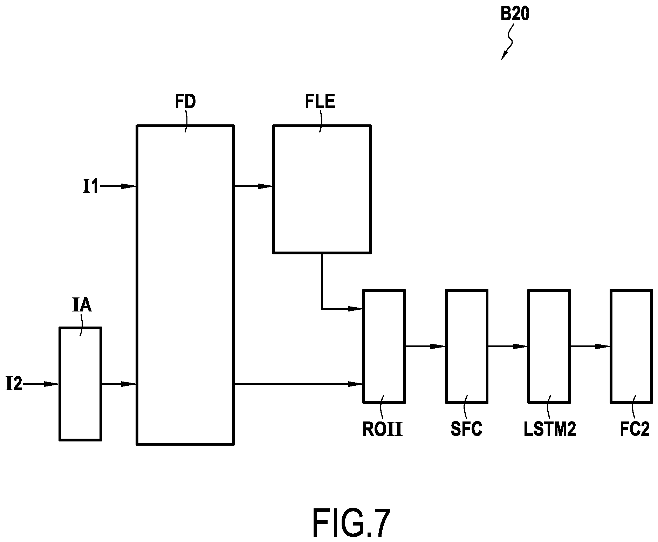

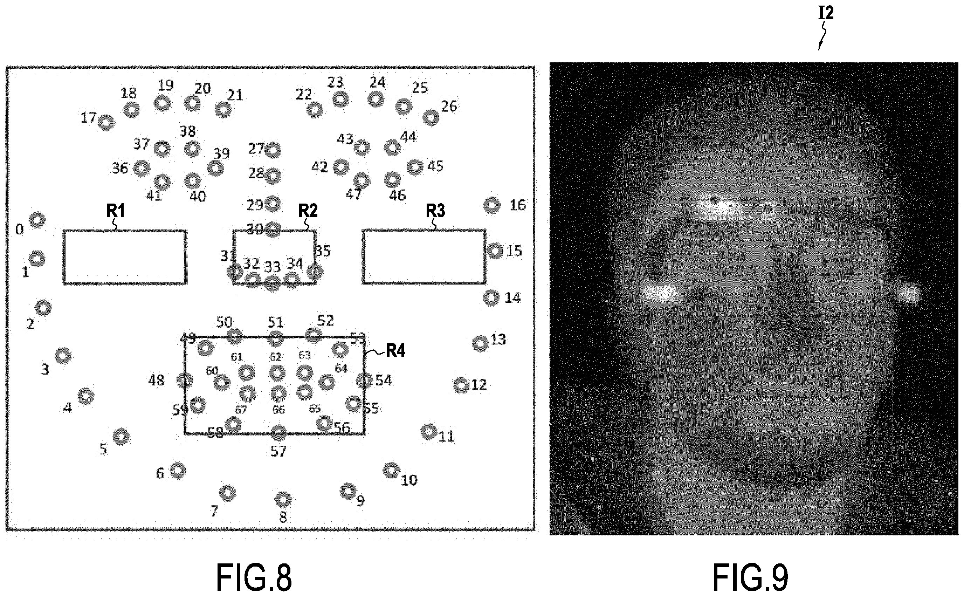

At each time step, images (or frames) I1 and I2 are acquired by system 100 from the camera 122 and the infra-red driver monitoring camera 125, and transmitted to the specialised sub-unit B20. Based on these inputs, the specialised sub-unit B20 is configured to perform the following tasks (Fig.7):
a) the image I2 is processed by an Image Alignment module IA so as to be aligned with the image I1, by estimating the planar homography between the planes of the two cameras 122 and 125.
b) the face detection module FD (shared with sub-unit B10) extracts from image I1 the sub-image showing the face of the driver;
c) a Facial Landmarks Extraction module FLE detects facial landmarks 0, 1, 2... 46, 47, in the sub-image . This step can be carried out using the tools proposed by reference [4].
d) a Regions Of Interest Identification module ROII identifies different regions of the face of the driver in thermal frame I2, based on the facial landmarks detected in the sub-image. The following Regions of Interest R1, R2, R3 and R4 are thus automatically identified in image I2: nose, cheeks and mouth regions (see Figs.8-9).
e) a Statistical Features Calculation module SFC calculates, for each of the Regions of Interest R1, R2, R3 and R4, the following statistical features: mean, variance, average variance by rows, average variance by columns, median, median by rows, median by column, of the values of the pixels.
f) an LSTM neural network LSTM2, which comprises a single layer of 50 hidden units, then processes these statistical features.
g) A fully connected layer FC2 finally processes the output of the neural network LSTM2 and outputs, at each time step, a second estimated set of features representing the affective state of the driver.

### B30, B40, B50, B60 and B70: Driver affective state features estimation based on driver monitoring data

The driver emotion determination unit B further comprises five additional specialised sub-unit B30, B40, B50, B60 and B70, to process the driver monitoring data acquired respectively by the driver eye-tracker 123 and the wristband 124.

The following five variables concerning the driver are acquired:
- Diameter PD of the pupils, and movement EM of the eyes of the driver. These variables are acquired by the eye-tracker 123 at first regular intervals which correspond to the acquisition period of the eye-tracker 123;
- the blood volume pulses BVP, the galvanic skin response GSR, and the inter-beat intervals IBI of the heart of driver. These variables are acquired by wristband 124 at second regular intervals which correspond to the acquisition period of the wristband 124.

The system 100 is configured to process data in successive calculation cycles or loops. At each of these cycles, the system 100 acquires images from cameras 121, images I1 and I2 from cameras 122 and 125.

In addition, the system 100 further acquires physiological data from the eye-tracker 123 and the wristband 124.

Since the acquisition periods of the eye tracker 123 and of the wristband 124 are longer than the acquisition periods of the cameras 121, 122 and 125, as explained above, the input synchronization unit S interpolates the acquired data and calculates an updated value of each of the variables PD, EM, BVP, GSR and IBI at each time step.

At each time step these five calculated values are transmitted respectively to the sub-units B30, B40, B50, B60 and B70.

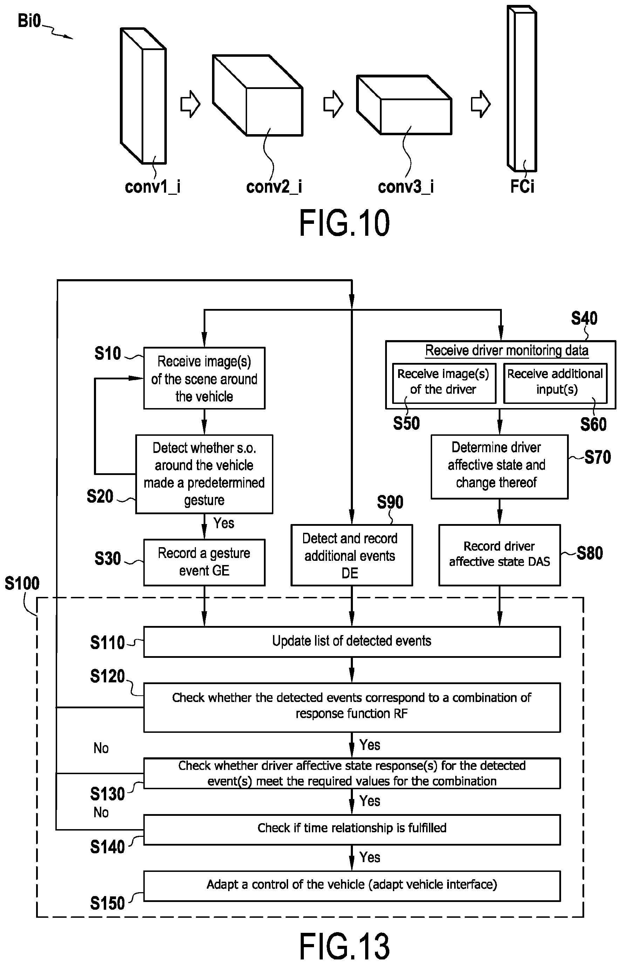

Since these five sub-units have the same architecture, only a single one is described below (referenced 'Bi0', where i can be equal to 3, 4, 5, 6 or 7):
The acquired data is inputted into a one-dimension convolutional neural network (1D-CNN). An example of such a neural network can be found in reference [5]; it is obtained by modifying a conventional two-dimension convolutional neural network (2D-CNN) to turn it into a one-dimension sequential data, capable of processing time-series sequences. In the present embodiment, the one-dimension convolutional neural network 1D-CNN, depicted in Fig.10, consists of three one-dimension convolutional blocks conv1_i, conv2_i and conv3_i, followed by a fully-connected block FCi.

Each of the convolutional blocks conv1_i, conv2_i and conv3_i comprises first respectively a convolutional layer, comprising respectively 64, 64, and 128 filters, each of size 3, stride 1 and padding 1; a LeakyReLU layer; a batch normalization layer; and a max-pooling layer.

The output of the third convolutional block conv3_i is inputted into the fully-connected block FCi.

On this basis, the block FCi outputs, at each time step, an estimated set of features representing the affective state of the driver.

### F: Multi-modal fusion

Each of the specialised sub-units B10, B20, B30, B40, B50, B60 and B70 outputs its own estimated set of features representing the affective state of the driver. These sets of features can comprise different numbers of features.

A final data fusion sub-unit F is provided to reconcile these different sets of features so as to output a prediction, or determination, of the affective state of the driver (Fig.10). Combining these different sets of estimated features improves overall performance and provides robustness in situations where any given sensor may be faulty or does not provide meaningful information.

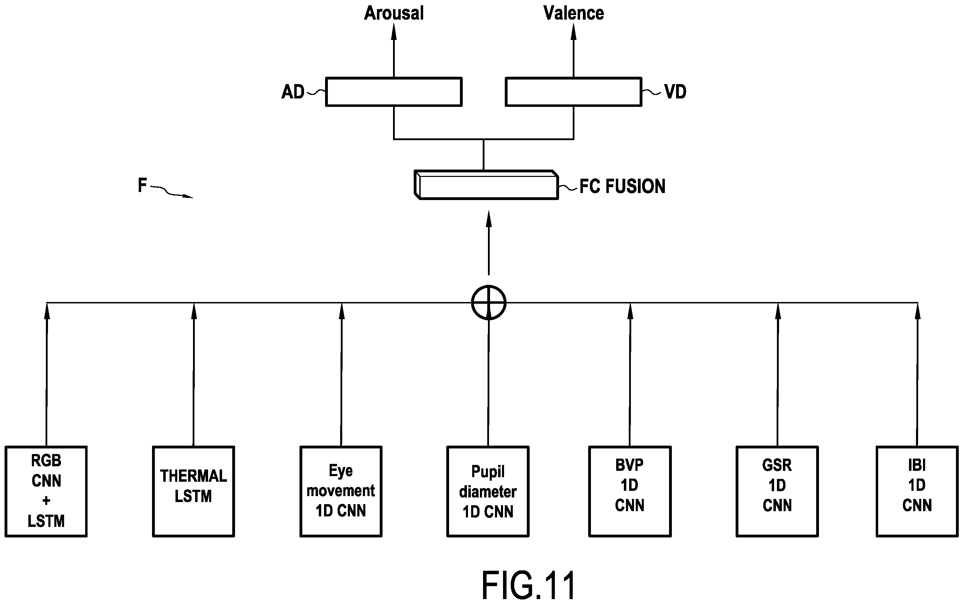

Fig.11 shows an overview of the fusion module. The set of features outputted by the respective sub-units B10, B20, B30, B40, B50, B60 and B70 are first concatenated and transmitted to a fully-connected layer FC FUSION.

The output of the layer FC FUSION is transmitted in parallel to two different layers AD and VD, which determine respectively the values of the valence Va and the arousal Ar of the driver, based on the output of the FC FUSION layer.

In alternative embodiments, the above-described data fusion sub-unit F is replaced by an attention unit. In such embodiments, the attention mechanism of the attention-based data fusion sub-unit F learns the most effective parts of the input feature vector that are responsible to estimate the driver emotion. Attention has been used for different multi-modal approaches, such as video captioning (see ref. [6]), or human activity recognition (see ref. [7]).

### The vehicle control unit C

At each time step, the outputs of the gesture detection unit A and of the driver emotion prediction unit B are transmitted to the vehicle control unit C.

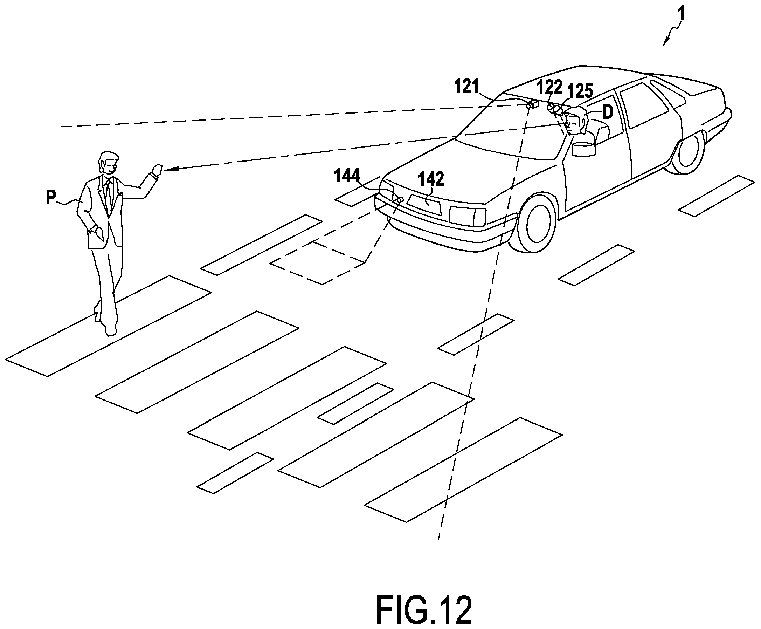

The output of the gesture detection unit A comprises the list of the predetermined gestures which have been detected around the car. Each detected gesture is associated (in this embodiment) with a reference attributed to a person identified around the car, and the relative position of that person with respect to the car. The person is typically a pedestrian P identified around the car, as shown on Fig.12.

The output of the driver emotion prediction unit B comprises the predicted values Va and Ar of the affective state of the driver for the current time step.

The vehicle control unit C, in specific circumstances, adapts a control of the vehicle. The value of the adapted control is determined by applying a predetermined response function RF to the information provided by the gesture detection unit A and the driver emotion prediction unit B.

This response function RF defines, for certain combinations of events and responses thereto, the control that has to be applied to the vehicle (that is, transmitted to one or more controlled devices of the vehicle).

The control can for instance be a control sent to the interface(s) of the vehicle to enable the car 1 to communicate about the situation.

In the present exemplary embodiment, the vehicle control unit C is configured, when the predetermined gesture(s) detected by the gesture detection unit A and the driver affective state response(s) determined by the driver affective state determination unit B correspond to one of the combinations of the response function RF, to transmit the corresponding control, as defined by function RF, to one or both of the interfaces of the car.

Each combination of the response function RF is defined by:
- at least one gesture event ('GE'); and for each gesture event, the possible predetermined gesture(s);
- optionally: one or more driving event(s); and for each driving event, the required features of the event; and
- at least one driver affective state response ('DASR'); and for each driver affective state response, the reference of the associated event, the value(s) of the required predetermined range(s) of the driver affective state or of a variation thereof;
- at least one predetermined time relationship between the timings of the respective event(s) and response(s) of the combination.

When the vehicle control unit C determines that all events of a combination of function RF have taken place, that the affective state responses of the driver to these events have the required values or are in the required ranges, and that the required predetermined time relationship(s) are fulfilled, the vehicle control unit C adapts the control of the vehicle as defined by the response function RF for the combination. In the present embodiment, in these circumstances, the vehicle control unit C transmits a control to the internal interface 130 and/or to the external interface 140 of the vehicle, in order to adapt the internal interface 130 or the external interface 140 of the vehicle.

### Operation of the vehicle driver assistance system 100

The operation of system 100 will now be presented in relation with Fig.12. and Fig.13.

Fig.13 shows the step of a method according to the present invention to assist the driver of the vehicle. In this case, the method is a method which enables the vehicle to communicate either with people around the car, and/or with the occupant(s) of the car.

As mentioned above, system 100 is configured to process the data received from sensors 120 iteratively, at successive calculation cycles or loops.

At each of these cycles, the following steps are carried out.
S10) System 100 acquires image(s) I from cameras 121, which represent the environment of the car.
S20) The gesture detection unit A detects, based on the series of images I acquired so far, whether one or more predetermined gestures have be made by people around the car.
S30) The detected gesture(s) is/are recorded by system 100 as gesture event(s) GE.
S40) At step S40, system 100 acquires or tries to acquire driver monitoring data from the eye-tracker 123, the wristband 124 and the cameras 122 and 125. The driver emotion prediction unit B receives the acquired driver monitoring data.

Actually, receiving the driver monitoring data comprises two sub-steps: S50) The driver emotion prediction unit B receives the images I1 of the driver, acquired by camera 122.
S60) The driver emotion prediction unit B receives the other driver monitoring data, acquired by the other driver monitoring sensors 123, 124 and 125.
S70) Based on the received driver monitoring data, the driver emotion prediction unit B determines the driver arousal Ar and valence Va for the time step. (As explained above, if at a time step, one or more of the driver monitoring sensors does not output any data, corresponding estimated replacement data are calculated and outputted by the input synchronization layer S of the driver emotion prediction unit B.)
S80) The driver affective state (DAS) is recorded by system 100.
S90) In addition, system 100 detects and records additional driving events. If the events correspond to predetermined driving event identified by the response function RF, these events are recorded by system 100 as a driving events DE.
S100) Based on the detected events and on the determined values of the driver affective state, system 100 then determines whether the events and the responses of the driver to these events correspond to a combination of the response function RF, and if this is the case, issues a control to adapt the vehicle interface.

Step 100 can be divided into several sub-steps:
S110) First, a list of detected events is established by system 100. At each time step, it is updated by system 100 by adding therein the events newly detected by system 100; in addition, events having a timing older than a predetermined timeout parameter are deleted from the events list.
S120) Then, the vehicle control unit C checks whether the events of the list of detected events corresponds to the events of any one of the combinations listed by the response function RF. Indeed in this case, this combination can cause the vehicle control unit C to issue a control to adapt the vehicle interface.

If it is concluded that the list of detected events does not correspond to any combination of the response function RF, the loop is terminated and a new loop is initiated at the next time step.
S130) If conversely it is concluded that the list of detected events corresponds to a combination of the response function RF, for each event of the combination, the control unit C determines whether the determined affective state response of the driver corresponds to the required values for the response, that is, is in the predetermined required range(s), as defined for the considered event in the considered combination of the response function RF.

If it is concluded that one or more of these driver affective state response(s), the affective state of the driver or the change thereof does not correspond to the required values, the loop is terminated and a new loop is initiated at the next time step.
S140) If conversely, for all these driver affective state response(s), the affective state of the driver or the change thereof corresponds to the values required for the considered combination, the vehicle control unit C further checks whether the timings of the events of the list of detected events, and of the responses thereto, fulfil the relationship(s) required for the considered combination.

If it is concluded that the timings of the events of the list of detected events does not fulfil the required time relationship(s), the loop is terminated and a new loop is initiated at the next time step.
S150) Conversely, if the timings of the detected events and determined responses fulfil the required relationship(s), the vehicle control unit C issues a control to adapt the internal and/or external interface of the vehicle.

An exemplary use case of system 100 is illustrated by Fig.12.

As illustrated by this figure, the car 1 arrives at a pedestrian crossing, where a pedestrian P is about to cross the road.

When the driver detects that the car is about to pass on the pedestrian crossing, and especially when he detects the presence of the pedestrian, and its intention to cross, his mental load increases; the diameter PD of his pupils increases, his heart inter-beat intervals IBI diminish, while his facial temperature increases. These three parameters are measured or at least can be determined based on the acquisitions respectively of the eye-tracker 123, of the wristband 124, and of the thermal camera 125 (in combination with the camera 122). His level of arousal increases of 3 points (on a 0-9 scale). This change is determined by the driver affective state determination unit B; its value corresponds to the value of an identified driver affective state event of the response function RF.

These changes of the driver affective state are determined by system 100; the successive values of the affective state of the driver are recorded by system 100.

Upon seeing the pedestrian, the driver decides to let the pedestrian cross the road: He brakes and stops his car. The action of braking the car constitutes a driving event DE, recorded by system 100.

The pedestrian notes that the car has stopped intently to let him pass, and thanks the driver by making a friendly wave of the hand. The gesture recognition unit A detects the friendly gesture made by the pedestrian (which is one of the predetermined gestures that the gesture recognition unit A is trained to detect).

The wave of the hand of the pedestrian constitutes a first gesture event GE and is recorded by system 100.

At the same time, the driver D positively reacts to the friendly wave of the hand by the pedestrian: When he sees the friendly gesture of the pedestrian, he is pleased by this gesture, his valence score increases by 3 points (on a 0-9 scale).

The changes of the valence and arousal values at the different stages are determined by the driver emotion determination unit and recorded.

At step S110, the vehicle control unit C updates the list of detected events. At the considered loop, the list of detected events comprises two events: the driving event DE and the gesture event GE.

At step S120, it further checks whether the detected events correspond to an identified combination of the response function RF. This happens to be the case: The response function RF includes a combination based on a single gesture event of the type 'hand-wave', and a single associated driver affective state response.

At step S130, the vehicle control unit therefore checks that the driver affective state response to the detected gesture of the pedestrian fulfils the response values requirements, i.e., is in the predetermined range(s), for the considered combination. In this case, the requirement for the driver response is an increase of the driver arousal of at least 2 points: This value is met by the actual driver response (of +3 points). Consequently, the algorithm proceeds to step S140.

At step S140, the vehicle control units checks that the time relationship(s) for the combination is or are fulfilled. For the considered combination, the only requirement is that the driver affective state response take place less than 5 seconds after the gesture event GE, which happens to be the case. Consequently, the vehicle control unit C concludes that the timings of the detected gesture event and of the driver response thereto fulfil the required time relationship for the considered combination.

Consequently, at step S150, the vehicle control unit C triggers the adaptation of the vehicle interface defined by response function RF for this situation, and controls the display 142 to display a friendly smiley.

### Training of the vehicle driver assistance system 100

In system 100, the gesture detection unit A and the driver emotion determination unit B are trained as follows.

The gesture detection unit A is trained by known methods based on a training data set comprising a number of videos. For each video, the ground truth data comprises the time periods during which predetermined gestures are made, and the indication of the specific gesture that has been made during the considered periods.

The driver emotion determination unit B is trained by end-to-end learning.

The training data set comprises all the driver monitoring data that have been recorded relative to the driver. In the presented embodiment, these data comprise the images I1 and I2 acquired by the driver monitoring cameras 122 and 125, the measurements PD,EM outputted by the eye-tracker 123, and the measurements BVP, GSR, and IBI, outputted by the wristband 124. The ground truth data comprise the values of the driver affective state as estimated over the same periods. These values are estimated by a group of experts, further taking into account estimations of their affective state by the drivers themselves.

The driver emotion determination unit B is trained to predict the driver affective state at each time step, based on the driver monitoring data received from the different sensors 122, 123, 124 and 125.

Although the present invention herein has been described with reference to particular embodiments, it is to be understood that these embodiments are merely illustrative of the principles and applications of the present invention. In addition, although he present invention has been presented in the case where the control of the vehicle is a control of the interface(s) of the vehicle, it should be understood that the present invention is applicable to any kind of control of a vehicle.

It is intended that the specification and examples be considered as exemplary only, the subject-matter for which protection is sought being defined by the claims.

## Claims

1. A vehicle driver assistance system (100) comprising
a gesture detection unit (A) configured, based on scene images (I) of a scene around a vehicle (1), to detect that in a vicinity of the vehicle a human being (P) has made a predetermined gesture which is a gesture among a set of predetermined gestures;
a driver emotion determination unit (B) configured, based at least on images (I1) of a driver (D) of the vehicle, to determine an affective state (Ar,Va) of the driver; and
a vehicle control unit (C) configured, when
the gesture detection unit (A) has detected that in the vicinity of the vehicle a human being (P) has made the predetermined gesture, and
the driver emotion determination unit (B) has determined that the affective state of the driver or a change thereof has reached a predetermined range within a maximum response time of the driver after the human being (P) made the predetermined gesture,
to adapt a control of the vehicle (1).

2. The vehicle driver assistance system of claim 1, wherein the affective state includes an arousal (Ar) and/or a valence (Va) of the driver (D).

3. The vehicle driver assistance system according to claim 1 or 2, wherein the vehicle control unit is configured to adapt the control of the vehicle (1) at least by issuing a control to adapt an interface (130,140) of the vehicle.

4. The vehicle driver assistance system of claim 3, wherein the control to adapt an interface (130,140) of the vehicle (1) includes a control to emit a light and/or sound pattern and/or to display visual information, inside and/or outside the vehicle.

5. The vehicle driver assistance system according to any one of claims 1 to 4, wherein the driver emotion determination unit (B) comprises one or more processors, and one or more storage devices storing instructions that when executed by the one or more processors cause the one or more processors to determine an affective state of the driver, using a neural network, the determination being made based at least on a first input which is a sequence of the images (I1) of the driver (D).

6. The vehicle driver assistance system according to claim 5, wherein the driver emotion determination unit (B) is configured to input, in addition to the images (I1) of the driver (D), at least one second input chosen among thermal camera images (I2) of the driver, outputs (EM,PD) of an eye tracker device (123) monitoring eyes of the driver; measurements of blood volume pulses (BVP), of a galvanic skin response (GSR), and of inter-beat intervals (IBI) of heart beats, of the driver; and
the driver emotion determination unit (B) is configured to determine the driver affective state also on the basis of said at least one second input.

7. The vehicle driver assistance system according to claim 6, wherein,
for each input of the driver emotion determination unit (B), the driver emotion determination unit (B) comprises a sub-unit (B10,B20,B30,B40,B50,B60,B70) configured to output an estimated set of features, based on the considered input, and
the driver emotion determination unit (B) comprises a data fusion sub-unit (F) configured to determine an affective state of the driver, based on the respective estimated sets of features.

8. The vehicle driver assistance system according to claim 6 or 7, comprising an input synchronization unit (S) configured, at each time step at which a new image of the driver is received by the driver emotion determination unit (B), for each input of the driver emotion determination unit (B), to output an up-to-date value of the input; and the driver emotion determination unit (B) is configured to determine the affective state of the driver on the basis of the up-to-date values outputted for the respective inputs.

9. A computer-implemented driver assistance method (100), the method comprising performing iteratively steps of:
S10) receiving a scene image (I) of a scene around a vehicle (1);
S20) based on the received scene images (I), detecting that a human being has made a predetermined gesture in a vicinity of the vehicle, the predetermined gesture being a gesture among a set of predetermined gestures;
S50) receiving a driver image (I1) of a driver (D) of the vehicle (1);
S70) based at least on the received driver images (I1), determining an affective state (Ar,Va) of the driver; and,
S100) if it has been detected that in the vicinity of the vehicle a human being (P) has made the predetermined gesture, and
it has been determined that the affective state of the driver or a change thereof has reached a predetermined range within a maximum response time of the driver after the human being (P) made the predetermined gesture,
adapting a control of the vehicle (1).

10. The vehicle driver assistance method according to claim 9, wherein adapting the control of the vehicle (1) comprises at least issuing a control to adapt an interface (130,140) of the vehicle.

11. The vehicle driver assistance method according to claim 9 or 10, wherein at step S70, the driver affective state or the change thereof is determined using a neural network, based at least on a first input which is a sequence of images (I1) of the driver.

12. The vehicle driver assistance method according to claim 11, further comprising a step of:
S60) inputting at least one second input (I2, I3, I4) chosen among thermal camera images (I2) of the driver, outputs (EM,PD) of an eye tracker device (123) monitoring eyes of the driver; measurements of blood volume pulses (BVP), of a galvanic skin response (GSR), and of inter-beat intervals (IBI) of heart beats, of the driver; and wherein
the determination of the driver affective state is performed also on the basis of said at least one second input.

13. The vehicle driver assistance method according to claim 12, wherein,
determining the driver affective state (Ar,Va) comprises, for each input, to output an estimated a set of features, based on the considered input; and
to determine the affective state (Ar,Va) of the driver (D) based on the respective estimated sets of features.

14. The vehicle driver assistance method according to claim 12 or 13, further comprising, at each time step at which a new image of the driver is received, for each input of the driver emotion determination unit (B), obtaining an up-to-date value of the input; and wherein the determination of the affective state of the driver is performed at each said time step, on the basis of the up-to-date values obtained for the respective inputs.

15. A computer program comprising instructions which, when the program is executed by a computer, cause the computer to carry out the steps of a method according to any one of claims 9 to 14.

16. A non-transitory computer-readable medium having stored thereon a computer program according to claim 15.

## Patentansprüche

1. Fahrerassistenzsystem (100) für ein Fahrzeug, umfassend
eine Gestenerkennungseinheit (A), die dazu ausgestaltet ist, auf Grundlage von Szenenbildern (I) einer Szene um ein Fahrzeug (1) herum zu erkennen, dass in einer Nähe des Fahrzeugs ein Mensch (P) eine vorbestimmte Geste ausgeführt hat, bei der es sich um eine Geste aus einem Satz von vorbestimmten Gesten handelt,
eine Fahreremotionsbestimmungseinheit (B), die dazu ausgestaltet ist, zumindest auf Grundlage von Bildern (11) eines Fahrers (D) des Fahrzeugs einen affektiven Zustand (Ar, Va) des Fahrers zu bestimmen, und
eine Fahrzeugsteuereinheit (C), die dazu ausgestaltet ist, wenn
die Gestenerkennungseinheit (A) erkannt hat, dass in der Nähe des Fahrzeugs ein Mensch (P) die vorbestimmte Geste ausgeführt hat, und
die Fahreremotionsbestimmungseinheit (B) bestimmt hat, das der affektive Zustand des Fahrers oder eine Veränderung desselben einen vorbestimmten Bereich innerhalb einer maximalen Reaktionszeit des Fahrers, nachdem der Mensch (P) die vorbestimmte Geste ausgeführt hat, erreicht hat,
eine Steuerung des Fahrzeugs (1) anzupassen.

2. Fahrerassistenzsystem für ein Fahrzeug nach Anspruch 1, wobei der affektive Zustand ein Arousal (Ar) und/oder eine Valenz (Va) des Fahrers (D) beinhaltet.

3. Fahrerassistenzsystem für ein Fahrzeug nach Anspruch 1 oder 2, wobei die Fahrzeugsteuereinheit dazu ausgestaltet ist, die Steuerung des Fahrzeugs (1) zumindest dadurch anzupassen, dass sie eine Steuerung zum Anpassen einer Schnittstelle (130, 140) des Fahrzeugs ausgibt.

4. Fahrerassistenzsystem für ein Fahrzeug nach Anspruch 3, wobei die Steuerung zum Anpassen einer Schnittstelle (130, 140) des Fahrzeugs (1) eine Steuerung zum Abgeben eines Licht- und/oder Schallmusters und/oder zum Anzeigen visueller Informationen innerhalb und/oder außerhalb des Fahrzeugs beinhaltet.

5. Fahrerassistenzsystem für ein Fahrzeug nach einem der Ansprüche 1 bis 4, wobei die Fahreremotionsbestimmungseinheit (B) einen oder mehrere Prozessoren und eine oder mehrere Speichervorrichtungen umfasst, auf denen Anweisungen gespeichert sind, die bei Ausführung durch den einen oder die mehreren Prozessoren den einen oder die mehreren Prozessoren dazu veranlassen, einen aktiven Zustand des Fahrers unter Verwendung eines neuronalen Netzes zu bestimmen, wobei die Bestimmung zumindest auf Grundlage einer ersten Eingabe erfolgt, bei der es sich um eine Folge der Bilder (11) des Fahrers (D) handelt.

6. Fahrerassistenzsystem für ein Fahrzeug nach Anspruch 5, wobei die Fahreremotionsbestimmungseinheit (B) dazu ausgestaltet ist, zusätzlich zu den Bildern (11) des Fahrers (D) mindestens eine zweite Eingabe einzugeben, die aus Wärmebildkamerabildern (I2) des Fahrers, Ausgaben (EM, PD) einer Augenverfolgungsvorrichtung (123), welche die Augen des Fahrers überwacht, Messungen von Blutvolumenpulsen (BVP), einer elektrodermalen Aktivität (EDA) und von Zwischenschlagintervallen (IBI) von Herzschlägen des Fahrers ausgewählt ist, und
die Fahreremotionsbestimmungseinheit (B) dazu ausgestaltet ist, den affektiven Zustand des Fahrers zudem auf Grundlage der mindestens einen zweiten Eingabe zu bestimmen.

7. Fahrerassistenzsystem für ein Fahrzeug nach Anspruch 6, wobei
die Fahreremotionsbestimmungseinheit (B) für jede Eingabe der Fahreremotionsbestimmungseinheit (B) eine Untereinheit (B10, B20, B30, B40, B50, B60, B70) umfasst, die dazu ausgestaltet ist, einen geschätzten Satz von Merkmalen auf Grundlage der berücksichtigten Eingabe auszugeben, und
die Fahreremotionsbestimmungseinheit (B) eine Datenzusammenführungsuntereinheit (F) umfasst, die dazu ausgestaltet ist, einen affektiven Zustand des Fahrers auf Grundlage des jeweiligen geschätzten Satzes von Merkmalen zu bestimmen.

8. Fahrerassistenzsystem für ein Fahrzeug nach Anspruch 6 oder 7, umfassend eine Eingabesynchronisierungseinheit (S), die dazu ausgestaltet ist, zu jedem Zeitschritt, bei dem ein neues Bild des Fahrers durch die Fahreremotionsbestimmungseinheit (B) empfangen wird, für jede Eingabe der Fahreremotionsbestimmungseinheit (B) einen aktualisierten Wert der Eingabe auszugeben, und die Fahreremotionsbestimmungseinheit (B) dazu ausgestaltet ist, den affektiven Zustand des Fahrers auf Grundlage der für die jeweiligen Eingaben ausgegebenen aktualisierten Werte zu bestimmen.

9. Computerimplementiertes Fahrerassistenzverfahren (100), wobei das Verfahren iteratives Durchführen der Schritte umfasst des:
S10) Empfangens eines Szenenbildes (I) einer Szene um ein Fahrzeug (1) herum,
S20) Erkennens, auf Grundlage der empfangenen Szenenbilder (I), dass ein Mensch eine vorbestimmte Geste in einer Nähe des Fahrzeugs ausgeführt hat, wobei es sich bei der vorbestimmten Geste um eine Geste aus einem Satz von vorbestimmten Gesten handelt,
S50) Empfangens eines Fahrerbildes (11) eines Fahrers (D) des Fahrzeugs (1),
S70) Bestimmens, zumindest auf Grundlage der empfangenen Fahrerbilder (11), eines affektiven Zustands (Ar, Va) des Fahrers, und,
S100) wenn bestimmt wurde, dass in der Nähe des Fahrzeugs ein Mensch (P) die vorbestimmte Geste ausgeführt hat, und
bestimmt wurde, dass der affektive Zustand des Fahrers oder eine Veränderung desselben einen vorbestimmten Bereich innerhalb einer maximalen Reaktionszeit des Fahrers, nachdem der Mensch (P) die vorbestimmte Geste ausgeführt hat, erreicht hat,
Anpassens einer Steuerung des Fahrzeugs (1).

10. Fahrerassistenzverfahren für ein Fahrzeug nach Anspruch 9, wobei das Anpassen der Steuerung des Fahrzeugs (1) zumindest das Ausgeben einer Steuerung zum Anpassen einer Schnittstelle (130, 140) des Fahrzeugs umfasst.

11. Fahrerassistenzverfahren für ein Fahrzeug nach Anspruch 9 oder 10, wobei bei Schritt S70 der affektive Zustand des Fahrers oder die Veränderung desselben unter Verwendung eines neuronalen Netzes zumindest auf Grundlage einer ersten Eingabe, bei der es sich um eine Folge von Bildern (11) des Fahrers handelt, bestimmt wird.

12. Fahrerassistenzverfahren für ein Fahrzeug nach Anspruch 11, ferner umfassend einen Schritt des:
S60) Eingebens mindestens einer zweiten Eingabe (I2, I3, I4), die aus Wärmebildkamerabildern (I2) des Fahrers, Ausgaben (EM, PD) einer Augenverfolgungsvorrichtung (123), welche die Augen des Fahrers überwacht, Messungen von Blutvolumenpulsen (BVP), einer elektrodermalen Aktivität (EDA) und von Zwischenschlagintervallen (IBI) von Herzschlägen des Fahrers ausgewählt ist, und wobei
die Bestimmung des affektiven Zustands des Fahrers zudem auf Grundlage der mindestens einen zweiten Eingabe durchgeführt wird.

13. Fahrerassistenzverfahren für ein Fahrzeug nach Anspruch 12, wobei
das Bestimmen des affektiven Zustands (Ar, Va) des Fahrers bei jeder Eingabe umfasst, dass ein geschätzter Satz von Merkmalen auf Grundlage der berücksichtigten Eingabe ausgegeben wird, und
dass der affektive Zustand (Ar, Va) des Fahrers (D) auf Grundlage der jeweiligen geschätzten Sätze von Merkmalen bestimmt wird.

14. Fahrerassistenzverfahren für ein Fahrzeug nach Anspruch 12 oder 13, ferner umfassend, zu jedem Zeitschritt, bei dem ein neues Bild des Fahrers empfangen wird, Erlangen, für jede Eingabe der Fahreremotionsbestimmungseinheit (B), eines aktualisierten Werts der Eingabe, und wobei die Bestimmung des affektiven Zustands des Fahrers bei jedem solchen Zeitschritt auf Grundlage der für die jeweiligen Eingaben erlangten aktualisierten Werte durchgeführt wird.

15. Computerprogramm, umfassend Anweisungen, die bei Ausführung des Programms durch einen Computer den Computer dazu veranlassen, die Schritte eines Verfahrens nach einem der Ansprüche 9 bis 14 auszuführen.

16. Dauerhaftes computerlesbares Medium, auf dem ein Computerprogramm nach Anspruch 15 gespeichert ist.

## Revendications

1. Système d'assistance au conducteur d'un véhicule (100) comprenant :
une unité de détection de geste (A) configurée, sur la base d'images de scène (I) d'une scène autour d'un véhicule (1), pour détecter que, au voisinage du véhicule, un être humain (P) a fait un geste prédéterminé qui est un geste parmi un ensemble de gestes prédéterminés ;
une unité de détermination d'émotion de conducteur (B) configurée, sur la base de au moins des images (I1) d'un conducteur (D) du véhicule, pour déterminer un état affectif (Ar, Va) du conducteur ; et
une unité de commande de véhicule (C) configurée, quand
l'unité de détection de geste (A) a détecté que, au voisinage du véhicule, un être humain (P) a fait le geste prédéterminé, et
l'unité de détermination d'émotion de conducteur (B) a déterminé que l'état affectif du conducteur ou un changement de celui-ci a atteint une plage prédéterminée dans un temps de réponse maximum du conducteur une fois que l'être humain (P) a fait le geste prédéterminé,
pour adapter une commande du véhicule (1).

2. Système d'assistance au conducteur d'un véhicule selon la revendication 1, dans lequel l'état affectif comprend un éveil (Ar) et/ou une valence (Va) du conducteur (D) .

3. Système d'assistance au conducteur d'un véhicule selon la revendication 1 ou 2, dans lequel l'unité de commande de véhicule est configurée pour adapter la commande du véhicule (1) au moins en délivrant une commande pour adapter une interface (130, 140) du véhicule.

4. Système d'assistance au conducteur d'un véhicule selon la revendication 3, dans lequel la commande pour adapter une interface (130, 140) du véhicule (1) comprend une commande pour émettre un modèle lumineux et/ou sonore et/ou pour afficher de l'information visuelle, à l'intérieur et/ou à l'extérieur du véhicule.

5. Système d'assistance au conducteur d'un véhicule selon l'une quelconque des revendications 1 à 4, dans lequel l'unité de détermination d'émotion de conducteur (B) comprend un ou plusieurs processeurs, et un ou plusieurs dispositifs de stockage qui stockent des instructions qui, lorsqu'elles sont exécutées par les un ou plusieurs processeurs, amènent les un ou plusieurs processeurs à déterminer un état affectif du conducteur, en utilisant un réseau neuronal, la détermination étant faite sur la base de au moins une première entrée qui est une séquence des images (I1) du conducteur (D).

6. Système d'assistance au conducteur d'un véhicule selon la revendication 5, dans lequel l'unité de détermination d'émotion de conducteur (B) est configurée pour entrer, en plus des images (I1) du conducteur (D), au moins une deuxième entrée choisie parmi des images de caméra thermique (12) du conducteur, des sorties (EM, PD) d'un dispositif de suivi d'oeil (123) qui surveille les yeux du conducteur ; des mesures d'impulsions de volume sanguin (BVP), d'un réflexe psychogalvanique (GSR), et d'intervalles inter-battement (IBI) de battements de coeur, du conducteur ; et
l'unité de détermination d'émotion de conducteur (B) est configurée pour déterminer l'état affectif du conducteur également sur la base de ladite au moins une deuxième entrée.

7. Système d'assistance au conducteur d'un véhicule selon la revendication 6, dans lequel, pour chaque entrée de l'unité de détermination d'émotion de conducteur (B), l'unité de détermination d'émotion de conducteur (B) comprend une sous-unité (B10, B20, B30, B40, B50, B60, B70) configurée pour délivrer un ensemble de caractéristiques estimé, sur la base de l'entrée considérée, et
l'unité de détermination d'émotion de conducteur (B) comprend une sous-unité de fusion de données (F) configurée pour déterminer un état affectif du conducteur, sur la base des ensembles de caractéristiques estimés respectifs.

8. Système d'assistance au conducteur d'un véhicule selon la revendication 6 ou 7, comprenant une unité de synchronisation d'entrée (S) configurée, à chaque pas de temps où une nouvelle image du conducteur est reçue par l'unité de détermination d'émotion de conducteur (B), pour chaque entrée de l'unité de détermination d'émotion de conducteur (B), pour délivrer une valeur à jour de l'entrée ; et l'unité de détermination d'émotion de conducteur (B) est configurée pour déterminer l'état affectif du conducteur sur la base des valeurs à jour délivrées pour les entrées respectives.

9. Procédé d'assistance à un conducteur mis en œuvre par ordinateur (100), le procédé comprenant le fait de réaliser de manière itérative des étapes de :
S10) réception d'une image de scène (I) d'une scène autour d'un véhicule (1) ;
S20) sur la base des images de scène reçues (I), détection qu'un être humain a fait un geste prédéterminé au voisinage du véhicule, le geste prédéterminé étant un geste parmi un ensemble de gestes prédéterminés ;
S50) réception d'une image de conducteur (I1) d'un conducteur (D) du véhicule (1) ;
S70) sur la base de au moins les images reçues de conducteur (I1), détermination d'un état affectif (Ar, Va) du conducteur ; et,
S100) si l'on a détecté que, au voisinage du véhicule, un être humain (P) a fait le geste prédéterminé, et
l'on a déterminé que l'état affectif du conducteur ou un changement de celui-ci a atteint une plage prédéterminée dans un temps de réponse maximum du conducteur une fois que l'être humain (P) a fait le geste prédéterminé,
adaptation d'une commande du véhicule (1).

10. Procédé d'assistance à un conducteur de véhicule selon la revendication 9, selon lequel l'adaptation de la commande du véhicule (1) comprend au moins le fait de délivrer une commande pour adapter une interface (130, 140) du véhicule.

11. Procédé d'assistance à un conducteur de véhicule selon la revendication 9 ou 10, selon lequel, à l'étape S70, l'état affectif de conducteur ou le changement de celui-ci est déterminé en utilisant un réseau neuronal, sur la base de au moins une première entrée qui est une séquence d'images (I1) du conducteur.

12. Procédé d'assistance à un conducteur de véhicule selon la revendication 11, comprenant en outre une étape de :
S60) entrée de au moins une deuxième entrée (12, 13, 14) choisie parmi des images de caméra thermique (12) du conducteur, des sorties (EM, PD) d'un dispositif de suivi d'œil (123) qui surveille les yeux du conducteur ; des mesures d'impulsions de volume de sang (BVP), d'un réflexe psychogalvanique (GSR), et d'intervalles inter-battement (IBI) de battements de coeur, du conducteur ; et selon lequel
la détermination de l'état affectif du conducteur est réalisée également sur la base de ladite au moins une deuxième entrée.

13. Procédé d'assistance à un conducteur de véhicule selon la revendication 12, selon lequel,
la détermination de l'état affectif de conducteur (Ar, Va) comprend, pour chaque entrée, le fait de délivrer un ensemble de caractéristiques estimé, sur la base de l'entrée considérée ; et
de déterminer l'état affectif (Ar, Va) du conducteur (D) sur la base des ensembles de caractéristiques estimés respectifs.

14. Procédé d'assistance à un conducteur de véhicule selon la revendication 12 ou 13, comprenant en outre, à chaque pas de temps où une nouvelle image du conducteur est reçue, pour chaque entrée de l'unité de détermination d'émotion de conducteur (B), l'obtention d'une valeur à jour de l'entrée ; et selon lequel la détermination de l'état affectif du conducteur est réalisée à chaque dit pas de temps, sur la base des valeurs à jour obtenues pour les entrées respectives.

15. Programme informatique comprenant des instructions qui, quand le programme est exécuté par un ordinateur, amènent l'ordinateur à mettre en œuvre les étapes d'un procédé selon l'une quelconque des revendications 9 à 14.

16. Support non-transitoire lisible par ordinateur ayant stocké dessus un programme informatique selon la revendication 15.
